# EUROPÄISCHE PATENTSCHRIFT

(11) **EP 2 962 883 B1**
(45) Veröffentlichungstag und Bekanntmachung des Hinweises auf die Patenterteilung: **28.03.2018**
(21) Anmeldenummer: 15169896.6
(22) Anmeldetag: 29.05.2015
(51) Int. Cl.: B66F 9/075, B60K 6/12, B60K 6/46, B60K 25/00

(54) **HYDROSTATISCHES ANTRIEBSSYSTEM**
HYDROSTATIC DRIVE SYSTEM
SYSTÈME D'ENTRAÎNEMENT HYDROSTATIQUE

(30) Priorität: 30.06.2014 DE 102014109151
(43) Veröffentlichungstag der Anmeldung: 06.01.2016
(73) Patentinhaber: Linde Material Handling GmbH, 63743 Aschaffenburg (DE)
(72) Erfinder: Hanke, Mark, 63739 Aschaffenburg (DE); Krumbholz, Peter, 63869 Jakobsthal (DE)
(74) Vertreter: Patentship Patentanwaltsgesellschaft mbH

(56) Entgegenhaltungen:
- EP-A1- 2 735 657
- WO-A1-2011/117493
- DE-A1-102012 001 367
- US-A1- 2013 178 328

## Beschreibung

Die Erfindung betrifft ein hydrostatisches Antriebssystem einer mobilen Arbeitsmaschine, insbesondere eines Flurförderzeugs, mit einem Verbrennungsmotor und einem von dem Verbrennungsmotor angetriebenen Arbeitshydrauliksystem, wobei das Arbeitshydrauliksystem mindestens eine von dem Verbrennungsmotor angetriebene Hydraulikpumpe aufweist, wobei die Hydraulikpumpe mit einer Saugseite Druckmittel aus einem Behälter ansaugt und in eine zu dem Arbeitshydrauliksystem geführte Förderleitung fördert, und wobei das Antriebssystem einen Speisekreis aufweist und mit mindestens einem Druckmittelspeicher versehen ist.

Hydrostatische Antriebssysteme von mobilen Arbeitsmaschinen, beispielsweise Flurförderzeuge, weisen einen hydraulischen Speisekreis auf, in dem ein im Wesentlichen konstanter Speisedruck ansteht, um die Verbraucher des Speisekreises mit Druckmittel zu versorgen. Bei bekannten hydrostatischen Antriebssystemen wird zur Versorgung des Speisekreises mit Druckmittel eine als Konstantpumpe ausgebildete Speisepumpe eingesetzt, die von dem Verbrennungsmotor der Arbeitsmaschine angetrieben ist und auf einem von dem Verbrennungsmotor angetriebenen Antriebsstrang montiert ist. Eine als Konstantpumpe ausgebildete Speisepumpe liefert aufgrund eines festen und konstanten Fördervolumens eine Fördermenge, die sich aus dem konstanten Fördervolumen der Speisepumpe und der Drehzahl des Verbrennungsmotors ergibt. Die Drehzahl des Verbrennungsmotors wird hierbei von den angeforderten Arbeitsfunktionen des Arbeitshydrauliksystems und/oder eines Fahrantriebs der Arbeitsmaschine bestimmt. Bei bekannten hydrostatischen Antriebssystemen folgt somit die von der Speisepumpe gelieferte Fördermenge nicht dem Bedarf des Speisekreises, sondern der sich aus der angeforderten Arbeitsfunktion erforderlichen Drehzahl des Verbrennungsmotors. Das Fördervolumen der als Konstantpumpe ausgebildeten Speisepumpe wird bei bekannten Antriebssystemen derart ausgelegt, dass bei minimaler Drehzahl des Verbrennungsmotors die Speisepumpe den maximalen möglichen Speisemengenbedarf des Speisekreises zur Verfügung stellt. Durch diese Auslegung der als Konstantpumpe ausgebildeten Speisepumpe entstehen bei höheren Drehzahlen des Verbrennungsmotors Überkapazitäten, wobei die über den Speisemengenbedarf des Speisekreises hinausgehende Fördermenge der Speisepumpe an einem Druckbegrenzungsventil, das auf den maximalen Speisedruck eingestellt wird, abgedrosselt wird. Durch das Abdrosseln der über den Speisemengenbedarf des Speisekreises hinausgehenden Fördermenge der als Konstantpumpe ausgebildeten Speisepumpe bei bekannten Antriebssystemen ergibt sich ein erhöhter Kraftstoffverbrauch des Verbrennungsmotors und ein erhöhter Wärmeeintrag in das Druckmittel des Antriebssystems. Aus dem gattungsbildenden Dokument DE 10 2012 001 367 A1 ist ein Antrieb bekannt. Ein gattungsgemäßes Antriebssystem mit einer als Konstantpumpe ausgebildete Speisepumpe ist aus der DE 10 2011 104 919 A1 bekannt. Bei dem aus der DE 10 2011 104 919 A1 bekannten Antriebssystem ist weiterhin ein Druckmittelspeicher vorgesehen, der einen zusätzlichen, im Antriebsstrang angeordneten Hydromotor des Antriebssystems antreibt, um über den Hydromotor einen hydraulischen Starter zum Starten des laufenden Verbrennungsmotors zur Verfügung zu stellen und/oder über den Hydromotor einen Booster-Antrieb zur Verfügung zu stellen, der bei laufendem Verbrennungsmotor ein zusätzliches Drehmoment in den Antriebsstrang einleitet.
Bei bekannten Antriebssystemen, bei denen die Speisepumpe zusammen mit einem Fahrantrieb und der Hydraulikpumpe des Arbeitshydrauliksystems auf dem Antriebsstrang angeordnet ist, ergibt sich eine große Baulänge des Antriebsstranges. Insbesondere bei mobilen Arbeitsmaschinen, bei denen der Antriebsstrang in Fahrzeugquerrichtung eingebaut ist, kann die Baulänge des Antriebsstranges zu Einbauproblemen in der Arbeitsmaschine führen.
Sofern die Speisepumpe starr, d.h. ohne lösbare Kupplungseinrichtung, auf einer Antriebswelle des Antriebsstrangs angeordnet ist, wird durch die Speisepumpe weiterhin das Startdrehmoment erhöht, das zum Starten des abgestellten Verbrennungsmotors erforderlich ist. Insbesondere bei einem Kaltstart unter kalten Umgebungsbedingungen kann es hierbei zu Startproblemen des abgestellten Verbrennungsmotors kommen, wobei der Verbrennungsmotor nicht anspringen kann oder ein elektrischer Anlasser des Verbrennungsmotors durch Überlastung versagen kann.
Weiterhin erhöht sich durch die erforderliche zusätzliche Speisepumpe der Herstellungsaufwand des Antriebssystems.

Der vorliegenden Erfindung liegt die Aufgabe zugrunde, ein Antriebssystem der eingangs genannten Gattung zur Verfügung zu stellen, das einen geringen Bauaufwand und einen geringen Bauraumbedarf für die Versorgung des Speisekreises mit Druckmittel aufweist.

Diese Aufgabe wird erfindungsgemäß dadurch gelöst, dass der Druckmittelspeicher zur Versorgung des Speisekreises mit Druckmittel vorgesehen ist, wobei der Druckmittelspeicher zum Laden mit Druckmittel mittels einer Ladeleitung an die Förderleitung der Hydraulikpumpe angeschlossen ist und zur Versorgung des Speisekreises eine Speisedruckversorgungsleitung an den Druckmittelspeicher angeschlossen ist, wobei in der Speisedruckversorgungsleitung ein Druckregelventil, insbesondere ein Druckminderventil, und in der Ladeleitung ein zwischen einer Sperrstellung und einer Durchflussstellung betätigbares Absperrventil angeordnet ist. Erfindungsgemäß dient somit der Druckmittelspeicher zur Versorgung des Speisekreises, wobei mittels des Druckregelventils, beispielsweise einem Druckminderventil, bedarfsgerecht die zur Versorgung der Verbraucher des Speiskreises tatsächlich erforderliche Druckmittelmenge aus dem Druckmittelspeicher entnommen wird. Ein Druckregelventil, wobei der Druckmittelspeicher unter Zwischenschaltung des Druckregelventils an den Speisekreis angeschlossen ist, ermöglicht es auf einfache Weise, den Druck im Speisekreis auf einen minimalen Speisedruck zu regeln und den Druckmittelbedarf des Speisekreises bedarfsgerecht aus dem Druckmittelspeicher zu entnehmen. Sofern im Speisekreis der Einstelldruck des Druckregelventils erreicht ist, wird das Druckregelventil in eine Schließstellung beaufschlagt, so dass dem Druckmittelspeicher kein weiteres Druckmittel zur Versorgung des Speisekreises entnommen wird. Sofern der Druck im Speisekreis bei angesteuerten Verbrauchern des Speisekreises unter den Einstelldruck des Druckregelventils absinkt, wird das Druckregelventil in eine Öffnungsstellung beaufschlagt, so dass Druckmittel aus dem Druckmittelspeicher zur Versorgung des Speisekreises entnommen wird. Durch die bedarfsgerechte Versorgung des Speisekreises mit Druckmittel unter Speisedruck aus dem Druckmittelspeicher wird eine Kraftstoffeinsparung des Verbrennungsmotors erzielt. Zudem wird die Erwärmung des Druckmittels des Antriebssystems verringert. Zum Laden des Druckmittelspeichers ist der Druckmittelspeicher an die Förderleitung der Hydraulikpumpe des Arbeitshydrauliksystems anschließbar. Das erfindungsgemäße Antriebssystem benötigt somit zur Versorgung des Speisekreises keine zusätzliche Speisepumpe.

Durch den Entfall der Speisepumpe weist das erfindungsgemäße Antriebssystem einen geringen Bauaufwand und eine geringen Bauraumbedarf auf, wobei die Baulänge des Antriebsstranges verringert werden kann. Zudem kann durch den Entfall der Speisepumpe bei dem erfindungsgemäßen Antriebssystem eine Verringerung des Startdrehmoments des Verbrennungsmotors erzielt werden, insbesondere bei einem Kaltstart des Verbrennungsmotors bei kalten Umgebungsbedingungen. Das Absperrventil ermöglicht es, in bestimmten Betriebssituationen, beispielsweise beim Start des Verbrennungsmotors, die Verbindung der Ladeleitung abzusperren, wodurch eine weitere Verringerung des Startdrehmoments des Verbrennungsmotors erzielbar ist.

Mit besonderem Vorteil sind gemäß einer Ausführungsform der Erfindung die Ladeleitung und die Speisedruckversorgungsleitung an eine Druckmittelleitung angeschlossen, die mit der Förderleitung der Hydraulikpumpe verbunden ist. Hierdurch wird ein Laden des Druckmittelspeichers mit Druckmittel aus der Förderleitung der Hydraulikpumpe erzielt und weiterhin ermöglicht, dass der Speisekreis mit Druckmittel aus dem Druckmittelspeicher oder mit Druckmittel aus der Förderleitung der Hydraulikpumpe versorgt werden kann, beispielsweise falls der Druckmittelspeicher keinen ausreichenden Ladedruck aufweisen sollte.

Gemäß einer Ausführungsform der Erfindung ist das Absperrventil von einer Federeinrichtung in die Sperrstellung betätigt und von dem in der Speisedruckversorgungsleitung anstehenden Speisedruck des Speisekreises in die Durchflussstellung betätigt. Hierdurch wird erzielt, dass bei einem drucklosen Druckmittelspeicher das in der Ladeleitung angeordnete Absperrventil in die Sperrstellung betätigt wird, so dass die Versorgung des Speisekreises mit Druckmittel aus der Förderleitung der Hydraulikpumpe priorisiert wird. Hierdurch wird insbesondere nach einem Start des abgestellten Verbrennungsmotors auf einfache Weise erzielt, dass zeitlich unmittelbar nach dem Startvorgang des Verbrennungsmotors in dem Speisekreis ein Speisedruck ansteht, der eine Versorgung der Verbraucher des Speisekreises ermöglicht. Das Absperrventil wird durch den in der Speisedruckversorgungsleitung anstehenden Speisedruck selbstregulierend in die Öffnungsstellung angesteuert, sobald ein ausreichender Speisedruck im Speisekreis vorhanden ist. In Verbindung mit dem Druckregelventil, das den Speisedruck selbstregulierend regelt, wird somit ebenfalls mit dem Absperrventil eine selbstregelnde Wegschaltung des Druckmittelspeichers von dem Speisekreis erzielt.

Gemäß einer Ausführungsform der Erfindung ist das Absperrventil bei abgeschaltetem Verbrennungsmotor in die Sperrstellung betätigt. Sofern das Absperrventil bei abgestelltem Verbrennungsmotor in die Sperrstellung betätigt ist, kann ein Entleeren und somit eine Entladen des Druckmittelspeichers in den Speisekreis, beispielsweise aufgrund von Leckagen im Speisekreis, über das Druckregelventil bei abgestelltem Verbrennungsmotor auf einfache Weise verhindert werden.

Gemäß einer Ausführungsform der Erfindung ist das Absperrventil elektrisch betätigbar und steht zur Ansteuerung mit einer elektronischen Steuereinrichtung in Wirkverbindung, wobei die elektronische Steuereinrichtung derart ausgebildet ist, dass bei abgeschaltetem Verbrennungsmotor das Absperrventil in die Sperrstellung betätigt ist. Hierdurch kann auf einfache Weise erzielt werden, das Absperrventil bei abgeschaltetem Verbrennungsmotor in die Sperrstellung zu betätigen.

Gemäß einer alternativen Ausführungsform der Erfindung ist das Absperrventil von dem in der Förderleitung der Pumpe anstehenden Druck in die Durchflussstellung betätigt. Das Absperrventil ist somit in die Durchflussstellung von dem Förderdruck der Pumpe und dem in der Speisedruckversorgungsleitung anstehenden Speisedruck in die Durchflussstellung betätigt. Hierdurch kann ebenfalls auf einfache Weise erzielt werden, dass das Absperrventil bei abgeschaltetem Verbrennungsmotor, wobei die Hydraulikpumpe keinen Förderdruck erzeugt, von der Federeinrichtung in die Sperrstellung betätigt ist. Die Ansteuerung des Absperrventils erfolgt somit rein hydraulisch, in dem der Abfall des Förderdruckes an der Hydraulikpumpe als Steuersignals verwendet wird, um das Absperrventil bei abgeschaltetem Verbrennungsmotor in die Sperrstellung betätigen zu können.

Mit einer vorteilhaften Ausführungsform der Erfindung ist die Hydraulikpumpe als im Verdrängervolumen verstellbare Verstellpumpe ausgebildet, wobei sich die Verstellpumpe beim Start des Verbrennungsmotor in einer Stellung befindet, in der die Verstellpumpe bei laufendem Verbrennungsmotor einen Förderstrom liefert. Hierdurch wird auf einfache Weise erzielt, dass nach dem Start des abgestellten Verbrennungsmotors die Verstellpumpe einen Förderstrom liefert, um den erforderlichen Speisedruck im Speisekreis zu erzeugen. Die Verstellpumpe kann sich hierbei beim Start des Verbrennungsmotors in einer Stellung mit einem minimalen Fördervolumen von ungleich Null befinden, bei dem die Verstellpumpe einen minimalen Förderstrom liefert. Sofern die Verstellpumpe als hydraulischer Starter des abgestellten Verbrennungsmotors eingesetzt wird, kann sich die Verstellpumpe zum Start des Verbrennungsmotors auch in einer Stellung mit maximalen Fördervolumen befinden, um ein entsprechend hohes Drehmoment zum Starten des Verbrennungsmotors bereit zu stellen.

In einer vorteilhaften Weiterbildung der Erfindung ist die Hydraulikpumpe als Pumpe und Motor betreibbar, wobei die Hydraulikpumpe im Pumpenbetrieb mit der Saugseite Druckmittel aus dem Behälter ansaugt und in die zu dem Arbeitshydrauliksystem geführte Förderleitung fördert und wobei der Hydraulikpumpe im Motorbetrieb an der Saugseite Druckmittel aus dem Druckmittelspeicher zuführbar ist.

Mit einer derartigen als Pumpe und Motor betreibbaren Hydraulikpumpe ist es auf einfache Weise möglich, die Hydraulikpumpe im Motorbetrieb als hydraulischen Starter zum Starten des Verbrennungsmotors bei einer Start-Stopp-Funktion und/oder als Booster-Antrieb zur Unterstützung des laufenden Verbrennungsmotors zu verwenden.

Der Druckmittelspeicher kann mittels einer geeigneten Ladeschaltung von der Hydraulikpumpe des Arbeitshydrauliksystems mit Druckmittel aufgeladen werden. Besondere Vorteile sind erzielbar, wenn gemäß einer Weiterbildung der Erfindung der Druckmittelspeicher im Bremsbetrieb eines Fahrantriebs der Arbeitsmaschine und/oder im Senkenbetrieb eines Hubantriebs des Arbeitshydrauliksystems und/oder im Bremsbetrieb eines Drehantriebs, beispielsweise eines Drehwerksantriebs, der Arbeitsmaschine mit Druckmittel aufladbar ist. Hierdurch kann eine Rekuperation und somit eine Rückgewinnung von Energie erfolgen und der Druckmittelspeicher mit freiwerdender Energie, beispielsweise im Bremsbetrieb des Fahrantriebs und/oder im Senkenbetrieb eines Hubantriebs des Arbeitshydrauliksystems und/oder im Bremsbetrieb eines Drehantriebs, aufgeladen werden. Hierdurch wird eine weitere Kraftstoffeinsparung des Verbrennungsmotors erzielt, da zum Laden des Druckmittelspeichers keine Energie von dem Verbrennungsmotor bereit gestellt werden muss und über die Versorgung des Speisekreises mit Druckmittel aus dem Druckmittelspeicher eine Versorgung des Speisekreises und Bereitstellung des Speisedruckes im Speisekreis mit zurückgewonnener Energie erzielt wird.

Der Speisekreis weist gemäß einer bevorzugten Ausgestaltungsform der Erfindung einen oder mehrere der folgenden Verbraucher auf:
- eine Verstelleinrichtung zur Verstellung des Verdrängervolumens der Hydraulikpumpe,
- eine Verstelleinrichtung zur Verstellung des Verdrängervolumens einer hydrostatischen Verstellpumpe und/oder eine Verstelleinrichtung eines hydrostatischen Verstellmotors eines hydrostatischen Fahrantriebs des Antriebssystems,
- eine Einspeisevorrichtung des hydrostatischen Fahrantriebs,
- eine hydraulische Bremsanlage der Arbeitsmaschine,
- Vorsteuerventile für die Steuerwegeventile des Arbeitshydrauliksystems.

Weitere Vorteile und Einzelheiten der Erfindung werden anhand des in der schematischen Figur dargestellten Ausführungsbeispiels näher erläutert. Hierbei zeigt
- Figur 1: den Schaltplan einer ersten Ausführungsform der Erfindung und
- Figur 2: den Schaltplan einer zweiten Ausführungsform der Erfindung.

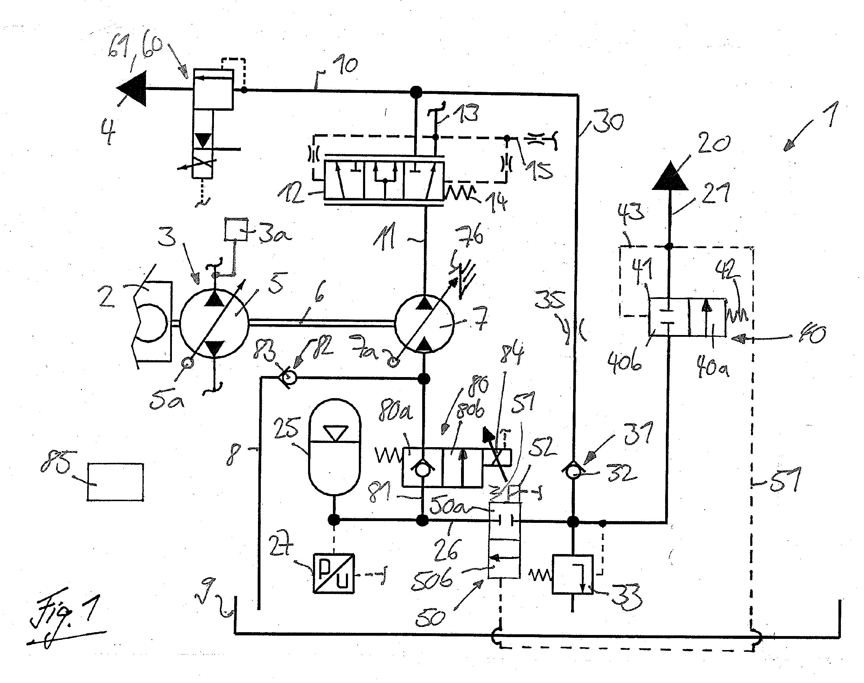

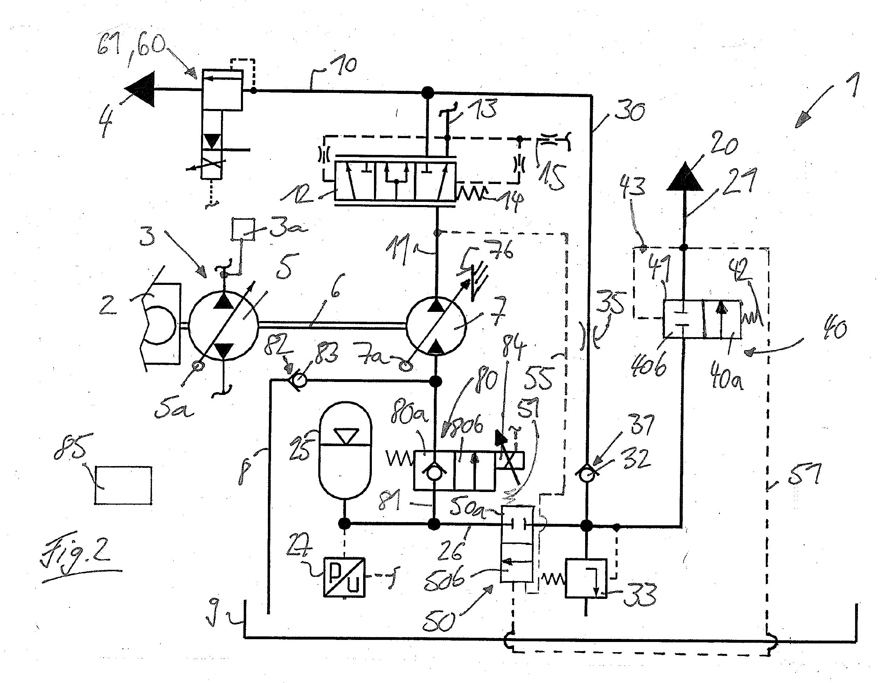

In der Figur 1 und der Figur 2 ist jeweils ein erfindungsgemäßes hydrostatisches Antriebssystem 1 einer nicht näher dargestellten mobilen Arbeitsmaschine, beispielsweise eines Flurförderzeugs, in einer Prinzipdarstellung dargestellt. In den Figuren 1 und 2 sind gleiche Bauteile mit gleichen Bezugsziffern versehen.

Der erfindungsgemäße Antriebssystem 1 besteht aus einem Verbrennungsmotor 2, beispielsweise einem Dieselmotor, einem von dem Verbrennungsmotor 2 angetriebenen Fahrantrieb 3 der Arbeitsmaschine sowie einem von dem Verbrennungsmotor 2 angetriebenen Arbeitshydrauliksystem 4.

Der Fahrantrieb 3 ist in den dargestellten Ausführungsbeispielen als hydrostatischer Fahrantrieb ausgebildet, der aus einer im Fördervolumen verstellbaren Fahrpumpe 5 besteht, die zum Antrieb mit einer Abtriebswelle 6 des Verbrennungsmotors 2 in trieblicher Verbindung steht. Die Fahrpumpe 5 steht mit einem oder mehreren im Schluckvolumen festen oder verstellbaren, nicht näher dargestellten Hydromotoren im geschlossenen Kreislauf in Verbindung, die auf nicht mehr dargestellte Weise mit den angetriebenen Rädern der Arbeitsmaschine in Wirkverbindung stehen.

Der Fahrantrieb 3 kann alternativ als elektrischer Fahrantrieb mit einem von dem Verbrennungsmotor 2 angetriebenen elektrischen Generator und einem oder mehreren elektrischen Fahrmotoren gebildet werden. Zudem kann als Fahrantrieb ein mechanischer Fahrantrieb mit einem mechanischen Getriebe, beispielsweise einem Stufenschaltgetriebe oder einem Leistungsverzweigungsgetriebe oder einem Drehmomentwandlergetriebe, vorgesehen werden.

Das Arbeitshydrauliksystem 4 umfasst Arbeitsfunktionen der Arbeitsmaschine, beispielsweise bei einem Flurförderzeug eine Arbeitshydraulik zum Betätigen eines Lastaufnahmemittels an einem Hubmast, beispielsweise einen Hubantrieb, einen Neigeantrieb und gegebenenfalls vorhandene Zusatzverbraucher wie einen Seitenschieber.

Das Arbeitshydrauliksystem 4 umfasst im dargestellten Ausführungsbeispiel mindestens eine im offenen Kreislauf betriebene Hydraulikpumpe 7, die zum Antrieb mit der Abtriebswelle 6 des Verbrennungsmotors 2 in trieblicher Verbindung steht. Die Hydraulikpumpe 7 des Arbeitshydrauliksystems 4 ist in den Ausführungsbeispielen der Figuren 1 und 2 als Verstellpumpe mit einem veränderbaren Verdrängervolumen ausgebildet, beispielsweise als Axialkolbenmaschine in Schrägscheibenbauweise.

Die von dem Verbrennungsmotor 2 angetriebene Abtriebswelle 6 mit dem von der Abtriebswelle 6 angetriebenen Fahrantrieb 3 und mit der von der Abtriebswelle 6 angetriebenen Hydraulikpumpe 7 des Arbeitshydrauliksystems 4 bilden einen Antriebsstrang des erfindungsgemäßen Antriebssystems 1.

Die Hydraulikpumpe 7 steht eingangsseitig mit der Saugseite mittels einer Ansaugleitung 8 mit einem Behälter 9 in Verbindung. Eine ausgangsseitig mit der Förderseite der Hydraulikpumpe 7 in Verbindung stehende Förderleitung 10 ist an eine nicht näher dargestellte Steuerventileinrichtung angeschlossen, mittels der die nicht näher dargestellten hydraulischen Verbraucher des Arbeitshydrauliksystems 4 steuerbar sind. Die Steuerventileinrichtung umfasst bevorzugt ein oder mehrere Steuerwegeventile zur Betätigung der Verbraucher. Im dargestellten Ausführungsbeispiel ist weiterhin ein Prioritätsventil 12 dargestellt, mit dem die bevorzugte Versorgung eines von der Hydraulikpumpe 7 versorgten Verbrauchers, beispielsweise einer hydraulischen Lenkungseinrichtung der Arbeitsmaschine, sichergestellt werden kann. Das Prioritätsventil 12 ist eingangsseitig mittels einer Förderleitung 11 mit der Förderseite der Hydraulikpumpe 7 verbunden und steht ausgangsseitig mit der zu dem Arbeitshydrauliksystem 4 geführten Förderleitung 10 sowie einer zu der Lenkungseinrichtung geführten Förderleitung 13 in Verbindung. Das Prioritätsventil 12 ist von einer Feder 14 sowie dem in einer Lastdruckleitung 15 anstehenden Lastdruck der Lenkungseinrichtung gesteuert.

Die Hydraulikpumpe 7 ist als im Verdrängervolumen verstellbare Verstellpumpe ausgebildet. Die Verstellpumpe weist eine von einem Anschlag 7b vorgegebene Stellung mit minimalem Fördervolumen von größer Null ccm auf, in dem die Verstellpumpe bei laufendem Verbrennungsmotor 2 einen minimalen Förderstrom liefert.

Das Antriebssystem 1 umfasst weiterhin einen Speisekreis 20. Der Speisekreis 20 umfasst eine Speisedruckversorgungsleitung 21, an die die entsprechenden Verbraucher eines Speisekreises 20 angeschlossen sind. Als Verbraucher des Speisekreises 20 sind eine Verstelleinrichtung 5a zur Verstellung des Verdrängervolumens der Fahrpumpe 5, eine Verstelleinrichtung 7a der Hydraulikpumpe 7, eine Einspeisevorrichtung 3a des hydrostatischen Fahrantriebs, eine Bremsanlage der Arbeitsmaschine und Vorsteuerventile für die Steuerwegeventile des Arbeitshydrauliksystems 4 vorgesehen.

Das erfindungsgemäße Antriebssystem 1 ist mit mindestens einem Druckmittelspeicher 25 versehen, der zur Versorgung des Speisekreises 20 mit Druckmittel vorgesehen ist. Der Druckmittelspeicher 25 ist zum Laden mit Druckmittel mittels einer Ladeleitung 26 an die Förderleitung 10 der Hydraulikpumpe 7 angeschlossen. Zur Versorgung des Speisekreises 20 mit Druckmittel aus dem Druckmittelspeicher 25 ist die Speisedruckversorgungsleitung 21 an den Druckmittelspeicher 25 angeschlossen.

Im dargestellten Ausführungsbeispiel sind die Ladeleitung 26 und die Speisedruckversorgungsleitung 21 an eine Druckmittelleitung 30 angeschlossen, die mit der Förderleitung 10 der Hydraulikpumpe 7 verbunden ist. In der Druckmittelleitung 30 ist ein Sperrventil 31 angeordnet, das im dargestellten Ausführungsbeispiel als in Richtung zur Ladeleitung 26 und zur Speisedruckversorgungsleitung 21 öffnendes Rückschlagventil 32 ausgebildet ist. Weiterhin ist der Druckmittelleitung 30 ein Druckbegrenzungsventil 33 zur Absicherung des Druckes in dem Druckmittelspeicher 25 zugeordnet. In der Druckmittelleitung 30 ist weiterhin zur Begrenzung des in der Druckmittelleitung 30 strömenden Druckmittelvolumenstroms eine Drosseleinrichtung 35 angeordnet, die als Blende oder Drossel ausgeführt sein kann. Die Ladeleitung 26 und die Speisedruckversorgungsleitung 21 sind hierbei stromab des Sperrventils 31 an die Druckmittelleitung 30 angeschlossen. Das Druckbegrenzungsventil 33 ist ebenfalls stromab des Sperrventils 31 an die Druckmittelleitung 30 angeschlossen.

In der Speisedruckversorgungsleitung 21 ist ein Druckregelventil 40 angeordnet. Das Druckregelventil 40 ist im dargestellten Ausführungsbeispiel als Druckminderventil 41 ausgebildet. Das Druckregelventil 40 ist von einer Federeinrichtung 42 in Richtung einer Durchflussstellung 40a beaufschlagt und von dem in der Speisedruckversorgungsleitung 21 anstehenden Speisedruck des Speisekreises 20 in Richtung einer Sperrstellung 40b betätigt. Hierzu ist an eine in Richtung der Sperrstellung 40b wirkende Steuerdruckfläche des Druckregelventils 40 eine Steuerleitung 43 angeschlossen, die mit der Speisedruckversorgungsleitung 21 stromab des Druckregelventils 40 in Verbindung steht.

In der Ladeleitung 26 ist ein zwischen einer Sperrstellung 50a und einer Durchflussstellung 50b betätigbares Absperrventil 50 angeordnet. Das Absperrventil 50 ist von einer Federeinrichtung 51 in die Sperrstellung 50a betätigt und von dem in der Speisedruckversorgungsleitung 21 anstehenden Speisedruck in die Durchflussstellung 50b betätigt. Hierzu ist an eine in Richtung der Durchflussstellung 50b wirkende Steuerdruckfläche des Absperrventils 50 eine Steuerleitung 51 angeschlossen, die mit der Speisedruckversorgungsleitung 21 stromab des Druckregelventils 40 verbunden ist.

Das Absperrventil 50 ist derart ausgebildet, dass bei abgeschaltetem und somit abgestelltem Verbrennungsmotor 2 das Absperrventil 50 in die Sperrstellung 50a betätigt ist, um ein Entleeren des Druckmittelspeichers 25 über das Druckregelventil 40 in den Speisekreis 20 zu vermeiden.

In dem Ausführungsbeispiel der Figur 1 ist hierzu das Absperrventil 50 zusätzlich elektrisch betätigbar, beispielsweise zusätzlich elektrisch in die Sperrstellung 50a betätigbar. Zur elektrischen Betätigung des Absperrventils 50 ist eine elektrische Betätigungseinrichtung 52 vorgesehen, beispielsweise ein Schaltmagnet.

In dem Ausführungsbeispiel der Figur 2, das sich von der Figur 1 nur durch die Ansteuerung des Absperrventils 50 unterscheidet, ist hierzu das Absperrventil 50 zusätzlich von dem in der Förderleitung 11 der Pumpe 7 anstehenden Druck in die Durchflussstellung 50b betätigt ist. Hierzu ist an eine in Richtung der Durchflussstellung 50b wirkende Steuerdruckfläche des Absperrventils 50 eine Steuerleitung 55 angeschlossen, die mit der Förderleitung 11 der Hydraulikpumpe 7 in Verbindung steht.

In der Förderleitung 10 ist ein elektrisch betätigbares Ladeventil 60 angeordnet, das bei einer Ansteuerung in eine die Förderleitung 10 drosselnde Drosselstellung zum Aufstauen eines Druckes betätigbar ist. Das Ladeventil 60 ist bevorzugt als Retarderventil 61 ausgeführt, das im Bremsbetrieb der Arbeitsmaschine in eine Drosselstellung betätigt wird, um durch Aufstauen eines Druckes in der Förderleitung 10 ein zusätzliches, abbremsendes Drehmoment an der mit der Kurbelwelle des Verbrennungsmotors 2 trieblich verbundenen Abtriebswelle 6 aufzuprägen, welches dem motorisch wirkenden Drehmoment an der Fahrpumpe 5 entgegenwirkt und so die Arbeitsmaschine abbremst. Die Druckmittelleitung 30 ist hierbei stromauf des Ladeventils 60 und somit zwischen dem Ladeventil 60 und dem Prioritätsventil 12 an die Förderleitung 10 angeschlossen.

Dem Druckmittelspeicher 25 ist weiterhin ein Drucksensor 27 zugeordnet. Der Drucksensor 27 dient zur Überwachung des Ladedruckes und somit des Ladezustands des Druckmittelspeichers 25.

Bei dem erfindungsgemäßen Antriebsstrang 1 ist die Hydraulikpumpe 7 des Arbeitshydrauliksystems 4 als Zweiquadrantentriebwerk ausgebildet, das bei gleicher Drehrichtung und gleicher Durchflussrichtung des Druckmittels als Pumpe und Motor betreibbar ist.

Im Pumpenbetrieb saugt die Hydraulikpumpe 7 über die Ansaugleitung 8 Druckmittel aus dem Behälter 9 an und fördert das Druckmittel über das Prioritätsventil 12 in die Förderleitung 10 des Arbeitshydrauliksystems 4 bzw. die Förderleitung 13 der Lenkungseinrichtung. Im Motorbetrieb der Hydraulikpumpe 7, in der die Hydraulikpumpe 7 als hydraulischer Starter einer Start-Stopp-Funktion zum Starten des abgestellten Verbrennungsmotors 2 und/oder als Booster-Antrieb zur Unterstützung des laufenden Verbrennungsmotors 2 ausgebildet ist, wird die Hydraulikpumpe 7 an der Saugseite mit Druckmittel aus dem Druckmittelspeicher 25 angetrieben.

Die Verbindung des Druckmittelspeichers 25 mit der Saugseite der Hydraulikpumpe 7 für den Motorbetrieb der Hydraulikpumpe 7 ist mittels eines elektrisch betätigbaren Steuerventils 80 steuerbar. Das Steuerventil 80 weist eine Sperrstellung 80a und eine Durchflussstellung 80b auf, wobei die Sperrstellung 80a bevorzugt leckagedicht ausgeführt ist mit einem in Richtung zur Hydraulikpumpe 7 sperrenden Sperrventil. Das Steuerventil 80 ist elektrisch betätigbar und hierzu mit einer elektrischen Betätigungseinrichtung 84 versehen.

Das Steuerventil 80 ist in einer Verbindungsleitung 81 angeordnet, die von der mit dem Druckmittelspeicher 25 verbundenen Ladeleitung 26 zu der zur Saugseite der Hydraulikpumpe 7 geführten Ansaugleitung 8 geführt ist. Die Verbindungsleitung 81 ist hierbei zwischen dem Absperrventil 50 und dem Druckmittelspeicher 25 an die Ladeleitung 26 angeschlossen.

In der Ansaugleitung 8 der Hydraulikpumpe 7 ist ein in Richtung zum Behälter 9 sperrendes Sperrventil 82 angeordnet, das bevorzugt als ein in Richtung zum Behälter sperrendes Rückschlagventil 83 ausgebildet ist.

Eine elektronische Steuereinrichtung 85 steht eingangsseitig mit dem Drucksensor 27 in Verbindung und dient zur Ansteuerung des Ladeventils 60 sowie des elektrisch betätigbaren Steuerventils 80. Die elektronische Steuereinrichtung 85 dient weiterhin in dem Ausführungsbeispiel der Figur 1 zur Ansteuerung der elektrischen Betätigungseinrichtung 52 des Absperrventils 50.

Bei dem erfindungsgemäßen Antriebssystem 1 kann der Druckmittelspeicher 25 auf einfache Weise bei einer Betätigung eines Verbrauchers des Arbeitshydrauliksystems 4 mit Druckmittel aufgeladen werden, sofern der Lastdruck des Verbrauchers den Ladedruck des Druckmittelspeichers 25 übersteigt. Zudem kann durch entsprechende Ansteuerung des Ladeventils 60 in eine Drosselstellung der Druckmittelspeicher 25 auf einfache Weise in Betriebszuständen aufgeladen werden, in denen der Verbrennungsmotor 2 Leistungsreserven aufweist. Sofern das Ladeventil 60 als Retarderventil 61 ausgeführt ist und im Bremsbetrieb der Arbeitsmaschine in eine Drosselstellung betätigt wird, wird zum Laden des Druckmittelspeichers 25 die kinetische Energie der abbremsenden Arbeitsmaschine verwendet und es erfolgt eine Energierückgewinnung. Beim Abbremsen der Arbeitsmaschine über den hydrostatischen Fahrantrieb 3 arbeitet die Fahrpumpe 5 als Motor, der die Hydraulikpumpe 7 des Arbeitshydrauliksystems 4 antreibt, so dass über das in Richtung der Drosselstellung angesteuerte Retarderventil 61 der Druckmittelspeicher 25 mit Druckmittel aufgeladen werden kann.

Die Hydraulikpumpe 7 fördert somit bei angesteuerten Verbrauchern des Arbeitshydrauliksystems 4 einen Förderstrom zur Betätigung der Verbraucher des Arbeitshydrauliksystems 4 und dient weiterhin zur Lieferung eines Förderstroms zum Laden des Druckmittelspeichers 25. Zum Laden des Druckmittelspeichers 25 kann die Hydraulikpumpe 7 primärseitig durch die von dem Verbrennungsmotor 2 gelieferte Leistung angetrieben werden. In Verbindung mit dem Retarderventil 61 wird die Hydraulikpumpe 7 zum Laden des Druckmittelspeichers 25 mit der beim Verzögern der Arbeitsmaschine in einem Bremsbetrieb aufgenommenen kinetischen Energie der Arbeitsmaschine angetrieben, so dass der Druckmittelspeicher 25 rekuperativ beim Abbremsen der Arbeitsmaschine mit Druckmittel aufgeladen wird.

In der elektronischen Steuereinrichtung 85 sind hierbei entsprechende Betriebsstrategien zum Laden des Druckmittelspeichers 25 hinterlegt.

Bei dem erfindungsgemäßen Antriebssystem 1 wird der Speisekreis 20 bedarfsgerecht mittels des Druckregelventils 40 mit Druckmittel aus dem Druckmittelspeicher 25 versorgt. Mittels des Druckregelventils 40 wird aus dem Druckmittelspeicher 25 nur diejenige Druckmittelmenge entnommen, die dem Speisemengenbedarf des Speisekreises 20 entspricht.

Die Stellung der Hydraulikpumpe 7 mit einem minimalem Fördervolumen von größer Null ermöglicht es, dass beim Start eines abgestellten Verbrennungsmotors 2 sofort der nötige Speisedruck in dem Speisekreis 20 zur Verfügung gestellt werden kann.

Sofern der Druckmittelspeicher 25 drucklos sein sollte, wird der Druckmittelspeicher 25 mittels des in die Sperrstellung 50a betätigten Absperrventils 50 von der Druckmittelleitung 30 abgekoppelt, so dass der Speisekreis 20 über die Förderleitung 10 von der Hydraulikpumpe 7 mit Druckmittel versorgt wird. Das in die Sperrstellung 50a betätigte Absperrventil 50 ermöglicht es somit, die Versorgung des Speisekreises 20 vor dem Ladebetrieb des Druckmittelspeichers 25 zu priorisieren, bis der Speisedruck im Speisekreis 20 erzeugt ist. Hierdurch wird erzielt, dass unmittelbar nach dem Start des abgestellten Verbrennungsmotors 2 von der laufenden Hydraulikpumpe 7 der Speisedruck des Speisekreises 20 erzeugt wird, der genutzt werden kann, um die Verstelleinrichtung 7a der Hydraulikpumpe 7 zu betätigen. Das Absperrventil 50 wird selbstständig von dem im Speisekreis 20 anstehenden Speisedruck in die Durchflussstellung 50a betätigt, so dass bei der Erfindung sowohl mittels des Druckregelventils 40 die Regelung des Speisedruckes im Speisekreis 20 als auch mittels des Absperrventils 50 die Wegschaltung des Druckmittelspeichers 25 selbstregelnd ohne externe Steuerung funktionsfähig ist.

Um ein Entladen des Druckmittelspeichers 25 bei abgeschaltetem Verbrennungsmotor 2 und somit stillgelegter Arbeitsmaschine zu vermeiden, wird in der Figur 1 von der Steuereinrichtung 85 mittels der Betätigungseinrichtung 52 das Absperrventil 50 in die Sperrstellung 50a betätigt bzw. in der Figur 2 bei fehlendem Förderdruck der Hydraulikpumpe 7 das Absperrventil 50 von der Federeinrichtung 51 in die Sperrstellung 50a betätigt.

Das erfindungsgemäße Antriebssystem 1 weist eine Reihe von Vorteilen auf.

Das erfindungsgemäße Antriebssystem 1 weist zur Versorgung des Speisekreises 20 keine Speisedruckpumpe auf. Dadurch ermöglicht das erfindungsgemäße Antriebssystem 1 eine kurze Einbaulänge des Antriebsstranges. Durch den Entfall der Speisepumpe ergibt sich weiterhin eine Kostenersparnis. Durch die bedarfsgerechte Bereitstellung des Speisemengenbedarfs und des Speisedruckes des Speisekreises 20 aus dem Druckmittelspeicher 25 wird eine Kraftstoffeinsparung des Verbrennungsmotors 2 erzielt. Der Kraftstoffverbrauch des Verbrennungsmotors 2 kann weiter verringert werden, wenn das Laden des Druckmittelspeichers 25 mit rekuperierter Energie erfolgt. Bei dem erfindungsgemäßen Antriebssystem 1 ist weiterhin durch die erfindungsgemäße Bereitstellung des Speisemengenbedarfs und des Speisedruckes eine Verringerung des Startdrehmoments des Verbrennungsmotors 2 erzielbar.

Durch eine entsprechende Auslegung des Volumens des Druckmittelspeichers 25 kann der Ladedruck des Druckmittelspeichers 25 reduziert werden, so dass sich geringe Drosselverluste an dem Druckregelventil 40 ergeben.

Als Druckmittelspeicher 25 können ein oder mehrere Druckmittelspeicher 25 verwendet werden. Bei mehreren Druckmittelspeichern können die einzelnen Druckmittelspeicher auf unterschiedlichen Druckniveaus aufgeladen werden. Hierdurch wird es ermöglicht, je nach Verbraucher und Verbraucherdruck den jeweils passenden Druckmittelspeicher 25 zur Versorgung des Verbrauchers zu verwenden. Für die Versorgung des Speisekreises 20 kann ein auf einen niedrigen Druck aufgeladener Druckmittelspeicher 25 verwendet werden. Für den Motorbetrieb der Hydraulikpumpe 7 für den Start des Verbrennungsmotors 2 und/oder einen zusätzlichen Boostantrieb kann ein auf einen hohen Druck aufgeladener Druckmittelspeicher 25 verwendet werden.

In der elektronischen Steuereinrichtung 85 ist hierbei eine entsprechende Betriebsstrategie hinterlegt, die es ermöglicht, dass der Druckmittelspeicher 25 trotz einer Entnahme einer Druckmittelmenge zur Versorgung des Speisekreises 20 immer ausreichend aufgeladen und gefüllt ist, um einen Start des Verbrennungsmotors 2 durch einen Motorbetrieb der Hydraulikpumpe 7 zu ermöglichen, bei dem die Hydraulikpumpe 7 mit Druckmittel aus dem Druckmittelspeicher 25 angetrieben wird.

## Patentansprüche

1. Hydrostatisches Antriebssystem (1) einer mobilen Arbeitsmaschine, insbesondere eines Flurförderzeugs, mit einem Verbrennungsmotor (2) und einem von dem Verbrennungsmotor (2) angetriebenen Arbeitshydrauliksystem (4), wobei das Arbeitshydrauliksystem (4) mindestens eine von dem Verbrennungsmotor (2) angetriebene Hydraulikpumpe (7) aufweist, wobei die Hydraulikpumpe (7) mit einer Saugseite Druckmittel aus einem Behälter (9) ansaugt und in eine zu dem Arbeitshydrauliksystem (4) geführte Förderleitung (10) fördert, und wobei das Antriebssystem einen Speisekreis (20) aufweist und mit mindestens einem Druckmittelspeicher (25) versehen ist, wobei der Druckmittelspeicher (25) zur Versorgung des Speisekreises (20) mit Druckmittel vorgesehen ist, wobei der Druckmittelspeicher (25) zum Laden mit Druckmittel mittels einer Ladeleitung (26) an die Förderleitung (10) der Hydraulikpumpe (7) angeschlossen ist und zur Versorgung des Speisekreises (20) eine Speisedruckversorgungsleitung (21) an den Druckmittelspeicher (25) angeschlossen ist, **dadurch gekennzeichnet, dass** in der Speisedruckversorgungsleitung (21) ein Druckregelventil (40), insbesondere ein Druckminderventil (41), und in der Ladeleitung (26) ein zwischen einer Sperrstellung (50a) und einer Durchflussstellung (50b) betätigbares Absperrventil (50) angeordnet ist.

2. Hydrostatisches Antriebssystem nach Anspruch 1, **dadurch gekennzeichnet, dass** die Ladeleitung (26) und die Speisedruckversorgungsleitung (21) an eine Druckmittelleitung (30) angeschlossen sind, die mit der Förderleitung (10) der Hydraulikpumpe (7) verbunden ist.

3. Hydrostatisches Antriebssystem nach Anspruch 1 oder 2, **dadurch gekennzeichnet, dass** das Absperrventil (50) von einer Federeinrichtung (51) in die Sperrstellung (50a) betätigt ist und von dem in der Speisedruckversorgungsleitung (21) anstehenden Speisedruck des Speisekreises (20) in die Durchflussstellung (50b) betätigt ist.

4. Hydrostatisches Antriebssystem nach einem der Ansprüche 1 bis 3, **dadurch gekennzeichnet, dass** das Absperrventil (50) bei abgeschaltetem Verbrennungsmotor (2) in die Sperrstellung (50a) betätigt ist.

5. Hydrostatisches Antriebssystem nach Anspruch 4, **dadurch gekennzeichnet, dass** das Absperrventil (50) elektrisch betätigbar ist und zur Ansteuerung mit einer elektronischen Steuereinrichtung (85) in Wirkverbindung steht, wobei die elektronische Steuereinrichtung (85) derart ausgebildet ist, dass bei abgeschaltetem Verbrennungsmotor (2) das Absperrventil (50) in die Sperrstellung (50a) betätigt ist.

6. Hydrostatisches Antriebssystem nach Anspruch 4, **dadurch gekennzeichnet, dass** das Absperrventil (50) von dem in der Förderleitung (10) der Pumpe (7) anstehenden Druck in die Durchflussstellung (50b) betätigt ist.

7. Hydrostatisches Antriebssystem nach einem der Ansprüche 1 bis 6, **dadurch gekennzeichnet, dass** die Hydraulikpumpe (7) als im Verdrängervolumen verstellbare Verstellpumpe ausgebildet ist, wobei sich die Verstellpumpe beim Start des Verbrennungsmotor (2) in einer Stellung befindet, in der die Verstellpumpe bei laufendem Verbrennungsmotor (2) einen Förderstrom liefert.

8. Hydrostatisches Antriebssystem nach einem der Ansprüche 1 bis 7, **dadurch gekennzeichnet, dass** die Hydraulikpumpe (7) als Pumpe und Motor betreibbar ist, wobei die Hydraulikpumpe (7) im Pumpenbetrieb mit der Saugseite Druckmittel aus dem Behälter (9) ansaugt und in die zu dem Arbeitshydrauliksystem (4) geführte Förderleitung (10) fördert und wobei der Hydraulikpumpe (7) im Motorbetrieb an der Saugseite Druckmittel aus dem Druckmittelspeicher (25) zuführbar ist.

9. Hydrostatisches Antriebssystem nach Anspruch 8, **dadurch gekennzeichnet, dass** die Hydraulikpumpe (7) im Motorbetrieb als hydraulischer Starter zum Starten des Verbrennungsmotors (2) bei einer Start-Stopp-Funktion und/oder als Booster-Antrieb zur Unterstützung des laufenden Verbrennungsmotors (2) ausgebildet ist.

10. Hydrostatisches Antriebssystem nach einem der Ansprüche 1 bis 9, **dadurch gekennzeichnet, dass** der Druckmittelspeicher (25) im Bremsbetrieb eines Fahrantriebs der Arbeitsmaschine und/oder im Senkenbetrieb eines Hubantriebs des Arbeitshydrauliksystems (4) und/oder im Bremsbetrieb eines Drehantriebs der Arbeitsmaschine mit Druckmittel aufladbar ist.

11. Hydrostatisches Antriebssystem nach einem der vorangegangenen Ansprüche, **dadurch gekennzeichnet, dass** der Speisekreis (20) einen oder mehrere der folgenden Verbraucher aufweist:
• eine Verstelleinrichtung (7a) zur Verstellung des Verdrängervolumens der Hydraulikpumpe (7),
• eine Verstelleinrichtung (5a) zur Verstellung des Verdrängervolumens einer hydrostatischen Verstellpumpe (5) und/oder eine Verstelleinrichtung eines hydrostatischen Verstellmotors eines hydrostatischen Fahrantriebs (3) des Antriebssystems,
• eine Einspeisevorrichtung (3a) des hydrostatischen Fahrantriebs (3),
• eine hydraulische Bremsanlage der Arbeitsmaschine,
• Vorsteuerventile für die Steuerwegeventile des Arbeitshydrauliksystems (4).

## Claims

1. Hydrostatic drive system (1) of a mobile machine, in particular an industrial truck, having an internal combustion engine (2) and a working hydraulic system (4) which is driven by the internal combustion engine (2), wherein the working hydraulic system (4) has at least one hydraulic pump (7) which is driven by the internal combustion engine (2), wherein the hydraulic pump (7) sucks pressure medium out of a container (9) with a suction side and feeds it into a feedline (10) which is made to extend to the working hydraulic system (4), and wherein the drive system has a supply circuit (20) and is provided with at least one pressure medium accumulator (25), wherein the pressure medium accumulator (25) is provided for supplying the supply circuit (20) with pressure medium, wherein the pressure medium accumulator (25) is connected, for the purpose of charging with pressure medium, to the feedline (10) of the hydraulic pump (7) by means of a charging line (26) and for the purpose of supplying the supply circuit (20) a supply pressure supply line (21) is connected to the pressure medium accumulator (25), **characterized in that**
a pressure regulating valve (40), in particular a pressure reduction valve (41), is arranged in the supply pressure supply line (21), and a shut-off valve (50) which can be activated is arranged between a closed position (50a) and an open position (50b) is arranged in the charging line (26) .

2. Hydrostatic drive system according to Claim 1, **characterized in that** the charging line (26) and the supply pressure supply line (21) are connected to a pressure medium line (30) which is connected to the feedline (10) of the hydraulic pump (7).

3. Hydrostatic drive system according to Claim 1 or 2, **characterized in that** the shut-off valve (50) is activated to move to the closed position (50a) by a spring device (51), and is activated to move to the open position (50b) by supply pressure, present in the supply pressure supply line (21), of the supply circuit (20).

4. Hydrostatic drive system according to one of Claims 1 to 3, **characterized in that** when the internal combustion engine (2) is switched off the shut-off valve (50) is activated to move into the closed position (50a).

5. Hydrostatic drive system according to Claim 4, **characterized in that** the shut-off valve (50) can be activated electrically and, for the purpose of actuation, is operatively connected to an electronic control device (85), wherein the electronic control device (85) is embodied in such a way that when the internal combustion engine (2) is switched off the shut-off valve (50) is activated to move into the closed position (50a).

6. Hydrostatic drive system according to Claim 4, **characterized in that** the shut-off valve (50) is activated to move into the open position (50b) by the pressure present in the feedline (10) of the pump (7).

7. Hydrostatic drive system according to one of Claims 1 to 6, **characterized in that** the hydraulic pump (7) is embodied as an adjustment pump which can be adjusted in the displacement volume, wherein, when the internal combustion engine (2) starts, the adjustment pump is in a position in which the adjustment pump supplies a feed current when the internal combustion engine (2) is running.

8. Hydrostatic drive system according to one of Claims 1 to 7, **characterized in that** the hydraulic pump (7) can be operated as a pump and motor, wherein in the pumping mode the hydraulic pump (7) sucks in pressure medium from the container (9) with the suction side and feeds it into the feedline (10) which is made to extend to the working hydraulic system (4), and wherein, in the motor mode, pressure medium can be fed from the pressure medium accumulator (25) to the hydraulic pump (7) on the suction side.

9. Hydrostatic drive system according to Claim 8, **characterized in that** in the motor mode the hydraulic pump (7) is embodied as a hydraulic starter for starting the internal combustion engine (2) in a start/stop function and/or as a booster drive for assisting the running internal combustion engine (2).

10. Hydrostatic drive system according to one of Claims 1 to 9, **characterized in that** the pressure medium accumulator (25) can be charged with pressure medium in the braking mode of a propulsion drive of the machine and/or in the lowering mode of a lift drive of the working hydraulic system (4) and/or in the braking mode of a rotary drive of the machine.

11. Hydrostatic drive system according to one of the preceding claims, **characterized in that** the supply circuit (20) has one or more of the following consumers:
• an adjustment device (7a) for adjusting the displacement volume of the hydraulic pump (7),
• an adjustment device (5a) for adjusting the displacement volume of a hydrostatic adjustment pump (5) and/or an adjustment device of a hydrostatic adjustment motor of a hydrostatic propulsion drive (3) of the drive system,
• a supply device (3a) of the hydrostatic propulsion drive (3),
• a hydraulic brake system of the machine, and
• pilot-control valves for the directional control valves of the working hydraulic system (4).

## Revendications

1. Système d'entraînement hydrostatique (1) d'une machine de travail mobile, en particulier d'un chariot de manutention, avec un moteur à combustion interne (2) et un système hydraulique de travail (4) entraîné par le moteur à combustion interne (2), dans lequel le système hydraulique de travail (4) présente au moins une pompe hydraulique (7) entraînée par le moteur à combustion interne (2), dans lequel la pompe hydraulique (7) aspire par un côté d'aspiration un fluide sous pression hors d'un récipient (9) et le refoule dans une conduite de transport (10) menée jusqu'au système hydraulique de travail (4), et dans lequel le système d'entraînement présente un circuit d'alimentation (20) et est muni d'au moins un réservoir de fluide sous pression (25), dans lequel le réservoir de fluide sous pression (25) est prévu pour l'alimentation du circuit d'alimentation (20) en fluide sous pression, dans lequel le réservoir de fluide sous pression (25) est raccordé pour le chargement en fluide sous pression à la conduite de transport (10) de la pompe hydraulique (7) au moyen d'une conduite de chargement (26) et une conduite d'alimentation en pression d'alimentation (21) est raccordée au réservoir de fluide sous pression (25) pour l'alimentation du circuit d'alimentation (20), **caractérisé en ce qu'**une vanne de réglage de pression (40), en particulier une vanne de réduction de pression (41), est disposée dans la conduite d'alimentation en pression d'alimentation (21) et une vanne d'arrêt (50) pouvant être actionnée entre une position d'arrêt (50a) et une position de passage (50b) est disposée dans la conduite de chargement (26) .

2. Système d'entraînement hydrostatique selon la revendication 1, **caractérisé en ce que** la conduite de chargement (26) et la conduite d'alimentation en pression d'alimentation (21) sont raccordées à une conduite de fluide sous pression (30), qui est reliée à la conduite de transport (10) de la pompe hydraulique (7).

3. Système d'entraînement hydrostatique selon la revendication 1 ou 2, **caractérisé en ce que** la vanne d'arrêt (50) est actionnée dans la position d'arrêt (50a) par un agencement de ressort (51) et est actionnée dans la position de passage (50b) par la pression d'alimentation du circuit d'alimentation (20) régnant dans la conduite d'alimentation en pression d'alimentation (21).

4. Système d'entraînement hydrostatique selon l'une quelconque des revendications 1 à 3, **caractérisé en ce que** la vanne d'arrêt (50) est actionnée dans la position d'arrêt (50a) lorsque le moteur à combustion interne (2) est arrêté.

5. Système d'entraînement hydrostatique selon la revendication 4, **caractérisé en ce que** la vanne d'arrêt (50) peut être actionnée électriquement et est pour la commande en liaison active avec un dispositif de commande électronique (85), dans lequel le dispositif de commande électronique (85) est configuré de telle manière que la vanne d'arrêt (50) soit actionnée dans la position d'arrêt (50a), lorsque le moteur à combustion interne (2) est arrêté.

6. Système d'entraînement hydrostatique selon la revendication 4, **caractérisé en ce que** la vanne d'arrêt (50) est actionnée dans la position de passage (50b) par la pression régnant dans la conduite de transport (10) de la pompe (7).

7. Système d'entraînement hydrostatique selon l'une quelconque des revendications 1 à 6, **caractérisé en ce que** la pompe hydraulique (7) est réalisée sous la forme d'une pompe à cylindrée variable réglable en volume de déplacement, dans lequel la pompe à cylindrée variable se trouve, lors du démarrage du moteur à combustion interne (2), dans une position dans laquelle la pompe à cylindrée variable fournit un débit de refoulement lorsque le moteur à combustion interne (2) tourne.

8. Système d'entraînement hydrostatique selon l'une quelconque des revendications 1 à 7, **caractérisé en ce que** la pompe hydraulique (7) peut fonctionner comme pompe et comme moteur, dans lequel la pompe hydraulique (7) en mode pompe aspire avec son côté d'aspiration du fluide sous pression hors du récipient (9) et le refoule dans la conduite de transport (10) menée jusqu'au système hydraulique de travail (4) et dans lequel en mode moteur du fluide sous pression provenant du réservoir de fluide sous pression (25) peut être fourni au côté d'aspiration.

9. Système d'entraînement hydrostatique selon la revendication 8, **caractérisé en ce que** la pompe hydraulique (7) en mode moteur est réalisée sous forme de démarreur hydraulique pour le démarrage du moteur à combustion interne (2) dans le cas d'une fonction Start-Stop et/ou comme entraînement d'appoint pour assister le moteur à combustion tournant (2).

10. Système d'entraînement hydrostatique selon l'une quelconque des revendications 1 à 9, **caractérisé en ce que** le réservoir de fluide sous pression (25) peut être chargé en fluide sous pression en mode de freinage d'un entraînement de marche de la machine de travail et/ou en mode de descente d'un entraînement de levage du système hydraulique de travail (4) et/ou en mode de freinage d'un entraînement rotatif de la machine de travail.

11. Système d'entraînement hydrostatique selon l'une quelconque des revendications précédentes, **caractérisé en ce que** le circuit d'alimentation (20) présente un ou plusieurs des consommateurs suivants:
• un dispositif de réglage (7a) pour le réglage du volume de déplacement de la pompe hydraulique (7),
• un dispositif de réglage (5a) pour le réglage du volume de déplacement d'une pompe hydrostatique à cylindrée variable (5) et/ou un dispositif de réglage d'un moteur de déplacement hydrostatique d'un entraînement de marche hydrostatique (3) du système d'entraînement,
• un dispositif d'alimentation (3a) de l'entraînement de marche hydrostatique (3),
• une installation de freinage hydraulique de la machine de travail,
• des vannes-pilotes pour les vannes-pilotes à une voie du système hydraulique de travail (4).
